# EUROPEAN PATENT APPLICATION

(11) **EP 4 529 977 A1**
(43) Date of publication of application: **02.04.2025**
(21) Application number: 23200404.4
(22) Date of filing: 28.09.2023
(51) Int. Cl.: B01D 61/36

(54) **DISTILLATION SYSTEM**

(71) Applicant: EvCon GmbH, 85652 Pliening-Landsham (DE)
(72) Inventor: Wenzel, Markus, 82008 Unterhaching (DE)
(74) Representative: Paustian & Partner Patentanwälte mbB

(57) **Abstract**

The invention relates to a distillation system for concentrating a feed liquid, comprising at least one condensation unit and at least one adjacent evaporation unit, each unit being provided by at least one frame element.

The frame elements of the system are assembled together to form a stack of frame elements.

Each frame element comprises:
• a feed side and an opposite steam side,
• an outer area comprising a plurality of channels including at least one of: a feed channel, a concentrate channel, two steam channels, and a distillate channel,
• an inner area which is open, encased by the outer area and limited by the feed side and the opposite steam side,
• a first group comprising at least one connection notch arranged on the feed side and connecting some of the channels with the inner area.

The first group comprises a feed connection notch connecting a feed channel with the inner area,

Each frame element further comprises:
• a second group of connection notches arranged on the steam side and connecting others of the channels with the inner area.

The second group comprises:
∘ a first steam connection notch connecting a first steam channel with the inner area,
∘ a second steam connection notch connecting a second steam channel with the inner area, and
∘ a distillate connection notch connecting a distillate channel with the inner area.

The system further comprises sealing elements configured to connect adjacent frame elements. The sealing elements comprise different sealing types which are formed such that they block different connection notches. The inner area of the frame element of the condensation unit is covered with a liquid tight wall on the feed side.

## Description

### FIELD OF THE DISCLOSURE

The present disclosure is related to a distillation system, in particular for producing a distillate (e.g. sterile water). The distillation system may in particular comprise a modular flow system comprising a plurality of frame elements.

### BACKGROUND OF THE DISCLOSURE

Modular flow systems comprising a plurality of frame elements are known e.g. from EP2427263 (A1) (or US2012038069 (A1) of the same family). The plurality of frame elements can be combined by means of welded web structures to various stacks comprising in each case at least two, in particular at least ten frame elements, in order to form a membrane distillation stage.

The frame elements comprise in each case an outer frame provided with passage openings and vapor and/or liquid channels as well as a central inner region surrounded by the outer frame. The vapor and/or liquid channels are arranged on the left and right sides of a respective frame element when combined together to form the modular flow system.

A pervaporation membrane is used, for example, to overcome the azeotropic point in the separation of multi-substance mixtures, such as alcohol and water, which cannot be overcome by conventional distillation methods.

Furthermore EP 2 627 437 B1 describes a multistage membrane distillation device comprising a heating stage, preferably multiple condensing/evaporating stages, and a condensing stage through which a liquid to be concentrated is passed in succession. Each condensing/evaporating stage comprises at least one condensing unit and at least one evaporating unit. Each condensing unit comprises a first steam chamber that is delimited at least partly by a condensation wall, and each evaporating unit comprises a second steam chamber that is delimited at least partly by a steam-permeable liquid-tight membrane wall.

A further device for distilling solutions using a membrane is known from WO 2005/089914 A1.

Still a further distillation apparatus is known from WO2019/233610 A1. The apparatus comprises a plurality of multistage membrane distillation modules. The frame elements of the apparatus comprise channel openings in the form through holes inside an a frame wall of the inner frame. Said frame wall separates an inner region of a frame element from a vapor and/or liquid channels. Said through holes require a relatively complex manufacturing process (e.g. requiring the use of special injection mold tools in an injection molding process). Moreover, no non-destructive inspection of the inner region is possible.

Modular, i.e. frame-based flow systems have shown to be useful in practice due to their high flexibility. However, they may imply disadvantages in terms of maintenance, as the inside of the welded stacks of frame-elements may not be accessible from outside, e.g. for cleaning. Therefore, e.g. salt crystals or other solids remaining on the surface of (porous) membranes may only hardly be removed. Such flow systems may thus be less suitable for specific functions, e.g. for a crystallization process. In a crystallization process, a feed liquid is concentrated until saturation, i.e. until crystals grow.

### SUMMARY OF THE DISCLOSURE

Currently, it remains desirable to provide a distillation system which implies reduced manufacturing and improved maintenance characteristics and which can be employed for further functions, e.g. for a crystallization process.

Therefore, the present disclosure relates to a distillation system for concentrating a feed liquid, comprising at least one condensation unit and at least one adjacent evaporation unit, each unit being provided by at least one frame element.
The frame elements of the system are assembled together to form a stack of frame elements.
Each frame element comprises:
- a feed side and an opposite steam side,
- an outer area comprising a plurality of channels including at least one of: a feed channel, a concentrate channel, two steam channels, and a distillate channel,
- an inner area which is open, encased by the outer area and limited by the feed side and the opposite steam side,
- a first group comprising at least one connection notch arranged on the feed side and connecting some of the channels with the inner area.

The first group comprises a feed connection notch connecting a feed channel with the inner area.
Each frame element further comprises:
- a second group of connection notches arranged on the steam side and connecting others of the channels with the inner area.
The second group comprises:
o a first steam connection notch (or a plurality of steam connection notches to increase the steam flow) connecting a first steam channel with the inner area,
o a second steam connection notch connecting a second steam channel with the inner area, and
o a distillate connection notch connecting a distillate channel with the inner area.
The system further comprises sealing elements configured to connect adjacent frame elements.
The sealing elements comprise different sealing types which are formed such that they block different connection notches.
The inner area of the frame element of the condensation unit is covered with a liquid tight wall on the feed side.

For example, the inner area of each condensation unit may be equipped with a liquid-tight condensing surface, which covers the open inner area and tightly separates the feed and steam sides.

By providing such a system, it becomes possible to open the distillation system in a non-destructive manner, i.e. to demount or de-assemble the assembled frame elements. Therefore, it becomes possible to clean the inner regions of a used system and e.g. remove salt or other particles or elements, e.g. in case of scaling, fouling or clogging. Furthermore, in case of a production defect or damage of a single frame element, the defective single part can be exchanged. The system can be re-assembled afterwards. In particular, the sealing elements may be removeable and may replace a welding, i.e. the frame elements do not need to be welded to each other.

The production can be further simplified, since only one frame type may be sufficient what is especially beneficial in injection molding process. Moreover, the sealing may take place on one side only.

In other words, the specific function of the (basically standardized) frame element may be defined by the specific sealing element. Since such a specific sealing element is arranged between two adjacent frame elements (and thus giving the function to this couple and/or to the space between the couple of frame elements), the frame elements may also be referred to as "half frames".

Moreover, the manufacturing process is less complex, because the frame elements do not require through holes inside a frame wall of the frame element. Said frame wall may separate an inner area of a frame element from a channel. Hence, an injection molding process for manufacturing the frame elements is less complex, as no specific shifter tools are required.

The system of the present disclosure also provides several advantages compared to a conventional plate distillation apparatus (e.g. comparable to a conventional heat exchanger):

The use of a liquid tight wall (e.g. a foil) and of an optional membrane enables improved heat transfer and corrosion resistance.

Moreover, a membrane distillation process becomes possible. The condensing and evaporating surfaces of the system may be (at least slightly) flexible or moveable. As a result, adhesions can be loosened more easily.

In addition, the system of the present disclosure can be relatively inexpensive, since rather inexpensive materials are required for manufacturing the system.

According to the present disclosure, each frame element may further comprise a sealing area surrounding the inner area and arranged on the feed side.

Each frame element may further comprise a sealing groove arranged on both the feed side and the steam side and configured to receive a sealing element which connects adjacent frame elements.

Each frame element may be axis symmetrical with the axis of symmetry vertical when the frame elements are stacked together in the system. In particular, at least one of the following elements of the system may be desirably symmetrical: the sealing groove, the channels 8and optionally the connection notches), and the inner area. A symmetry of the outer shape of the frame elements is possible but not necessary.

The inner region may provide an open 3D (three-dimensional) space surrounded by the frame element.

Optionally a grid element may be arranged in the open space of the inner area.

The different sealing types may be configured to leave different connection notches unblocked. For example, the different sealing types may be made of the same base type, wherein different sections may be cut off.

The system may be configured such that at least one sealing element may be removeable from the frame elements. This may facilitate maintenance or cleaning of the system, as well as replacing single elements, e.g. a single sealing element or a single frame element.

The sealing types may comprise at least a first type being a condensation sealing, a second type being a feeding sealing and a third type being an evaporation sealing.

The condensation sealing may be configured to block all connection notches except:
- the first steam connection notch connecting a first steam channel with the inner area, and
- the distillate connection notch connecting a distillate channel with the inner area,

The feeding sealing may be configured to block all connection notches except:
- a feed connection notch connecting a feed channel with the inner area, and
- optionally a concentrate connection notch of the first group connecting a concentrate channel with the inner area, e.g. in case the evaporation frame comprises a membrane arranged on the feed side, or in case the connection notch to the concentrate channel is arranged on the steam side of the frame.

The evaporation sealing may be configured to block all connection notches except:
- the second steam connection notch connecting a second steam channel with the inner area, and
- optionally an additional leakage connection notch connecting a leakage channel arranged on the steam side with the inner area. The leakage channel may be present, in case the evaporation unit comprises a membrane. Otherwise the leakage channel may be combined with (or represented by) the existing concentrate channel of an adjacent frame element.

Accordingly, the first group may further comprise a concentrate connection notch connecting a concentrate channel with the inner area. However, this concentrate connection notch may also be part of the second group, i.e. be arranged on the steam side, e.g. in case the evaporation unit does not comprise a membrane element. In this case a feed liquid passing the inner area may namely be evacuated by a concentrate connection notch arranged on the steam side of an adjacent frame element

The frame elements of the system may basically be made of the same base type.

A first frame type may be a condensation frame comprising a liquid tight wall in the form of a foil attached to the sealing area to cover the inner area and/or the space of the inner area on the feed side.

A second frame type may be an evaporation frame which may comprise a membrane attached to the sealing area to cover the inner area and/or the space of the inner area on the feed side.

Alternatively, the second frame type may be an evaporation frame, wherein the inner area and/or the space of the inner area may be open on the feed side, i.e. open towards an adjacent frame element or in other words, without being covered by a membrane or a foil.

Accordingly, the evaporation frame may be equipped with or without a membrane.

The condensation unit may comprise two stacked condensation frames arranged such that their steam sides face each other.

The evaporation unit may comprise two stacked evaporation frames arranged such that their steam sides face each other.

From another point of view the system may also be described as follows: The system may comprise a plurality of stacked condensation-evaporation sets. Each set may comprise a condensation unit and an evaporation unit, wherein the sets may be alternately connected via the steam sides so that the same unit types may be (always) adjacent to each other.

Accordingly, the sets may be arranged such that the steam sides of the condensation units of two adjacent sets face each other, and the steam sides of the evaporation units of two adjacent sets face each other.

The condensation frames of the condensation unit may be connected by a condensation sealing.

The evaporation frames of the evaporation unit may be connected by an evaporation sealing.

The frames of the condensation unit and of the evaporation unit may be adjacent to each other and connected by a feeding sealing.

The channels may be provided by openings in the frame element from the feed side to the opposite steam side.

The connection notches may be arranged on a surface of one of the feed side and the steam side.

The two steam channels may be arranged above the inner region.

The distillate channel and the optional leakage channel may be arranged below the inner region.

The feed channel may also be arranged above the inner region or on a lateral side of the inner region.

The concentrate channel may be arranged below the inner region or on a lateral side of the inner region.

However, in case the system uses membranes, it is also possible that the feed channel is be arranged below the inner region of the inner region, and the concentrate channel is arranged above the inner region.

Each frame element may comprise an outer frame and an inner frame, the inner frame encasing the inner region and being surrounded by the outer frame.

The channels and the notches may be arranged between the outer frame and the inner frame.

Each frame element may comprise a lowered area having a reduce thickness compared to the outer area and/or outer frame.

The lowered area may include at least one of the inner area, the inner frame, and a section of the frame element where the sealing area may be arranged. In one example, the section of the frame element where the sealing area may be arranged may be the inner frame.

Each frame element may comprise a distribution notch on the feed side connected to the feed connection notch and configured to distribute a feed liquid across the inner area.

The distribution notch may be arranged outside the lowered area and/or between the sealing grove and the lowered area. The distribution notch may extend in a substantially horizontal direction when the frame elements are stacked together in the system, and/or in a direction which is substantially parallel to an upper side of the inner area or of the inner frame.

Accordingly, for each element the thickness of at least one of the inner frame, a section of the frame element where the sealing area may be arranged, and the grid element may be thinner than the outer frame.

The lowered area may in particular serve to accommodate a feed spacer and optionally at least one of the membrane and the condensation wall (depending on the frame type and the use of a one of these elements).

The feed spacer may be arranged in a feed space, which may be arranged between the condensation wall and a membrane. The feed spacer may be used to keep the feed space between the condensation wall and the adjacent membrane open, in order to allow a feed liquid to pass the feed space. In case a membrane is not used, the feed spacer is not required.

The feed spacer may have a mesh-like form and be relatively thin, e.g. me have a thickness of 0.5mm or less.

Each membrane frame or at least one membrane frame may have a plane surface on the steam side, i.e. no lowered area.

The system is a multistage distillation apparatus, comprising a plurality of serial stages, each stage comprising at least one condensation unit and at least one evaporation unit, wherein a first stage is configured to generate steam and feed the steam to a second stage.

Further optional aspects of the distillation system are described in the following.

The present disclosure may further relate to a multistage distillation system, comprising a plurality of multistage distillation modules, the modules being configured to be flowed through in parallel by a liquid to be concentrated. Each module may comprise a plurality of serial condensation/evaporation stages configured to be flowed through in series or in parallel by the liquid to be concentrated.

Each condensation/evaporation stage may comprise a plurality of parallel condensation/evaporation elements configured to be flowed through in parallel by the liquid to be concentrated. Each condensation/ evaporation element comprises at least one condensation unit and at least one evaporation unit.

The system further desirably comprises at least one of: a centralized heating stage configured to generate steam and to provide the steam to each of the modules in parallel, and a centralized condensation stage configured to receive steam from each of the modules in parallel and to condensate the steam.

Accordingly the multistage distillation system may have a hierarchical organization with e.g. three levels (the system may also comprise more or less levels, e.g. two or four levels). On the first and highest level, the system comprises a plurality of parallel multistage distillation modules. On the second (lower) level, the system comprises a plurality of serial condensation/evaporation stages. On the third (lowest) level, the system comprises a plurality of parallel condensation/evaporation elements. A condensation/evaporation element may comprise first and second frame elements.

Due to this arrangement the system may comprise up to several thousand condensation/evaporation elements, e.g. by simply combining several thousand first and a second frame elements, respectively.

Furthermore, by providing such an system, it is possible that several modules commonly use a centralized (or single) heating stage and/or a centralized (or single) condensation stage. Therefore the energy consumption of the centralized (or single) heating stage and/or a centralized (or single) condensation stage may be shared by a plurality of parallel modules what leads to an optimized efficiency of the system and at the same time (due to the use of more than one module) to a higher total output of the system.

In particular, the centralized heating and condensation stages can lead to a simplified design of the system, because several modules may be operated in parallel and each module does not require its own heating system. An increase in efficiency of the system may thus also be obtained and depends e.g. on the number of stages connected in series. The heat flow supplied at the front (i.e. at a first stage) and dissipated on the cold side (i.e. from the last stage toward the centralized condensation stage) may be used several times (i.e. at each stage from the first to the last stage) for condensation and evaporation due to the serial connection of the stages. If modules are connected in parallel, more heating heat may be required per additional module.

The centralized heating stage generates steam (i.e. a vapor; the terms may be used interchangeably) and provides the steam to each of the modules in parallel. Accordingly the modules (i.e. desirably the respective first stages) are heated with the supplied steam. In comparison to supplying (hot) liquid and generating steam individually in the respective modules (e.g. by using a vapor generator as known e.g. from EP 2 427 263 B1), the present disclosure has the advantage that due to thermodynamics steam will automatically be attracted most by the coldest surface. Hence, a module which is colder than the others will automatically be heated more. As a consequence, the temperature of the modules (i.e. in particular of their respective first stages) is automatically balanced.

In comparison, heating with (hot) liquid requires a very precise control implying high effort and reduced reliability.

The same applies to a centralized condensation stage. Due to thermodynamics the vapors (or steams) generated in the last stage of each module will be attracted by the centralized condensation stage depending on the temperature of the vapors. Hence, a module which generates hotter vapor (or steam) in its last stage will automatically supply more steam to the centralized condensation stage and will therefore be cooled more than the other (colder) modules. As a consequence, the heat of the modules is automatically balanced.

The centralized heating stage may be configured to provide the steam in each module to a first stage of the serial condensation/evaporation stages.

Accordingly, the first stage of each module may be heated by the centralized heating stage.

The centralized heating stage may be configured to provide the steam in each module to the condensation units of the first stage in parallel, in particular for heating said condensation units to a first predetermined temperature.

The centralized heating stage and/or the centralized condensation stage may be external to the modules, e.g. to the single stacks of frame elements forming the modules. The centralized heating stage and/or the centralized condensation stage may be connected to the modules by e.g. pipes, tubes and/or hoses.

Each condensation/evaporation stage may be formed by a single stack of frame elements providing the parallel condensation/ evaporation elements.

Each module may be formed by a single stack of frame elements providing the serial condensation/evaporation stages.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

### BRIEF DESCRIPTION OF THE DRAWINGS

Fig. 1a shows the schematic distillation process of fig. 1b, wherein the system does not have a membrane;
Fig. 1b shows a schematic representation of a distillation process in a system having a membrane according to embodiments of the present disclosure;
Fig. 2a shows a schematic representation of the basic design of a feed side of a frame element according to embodiments of the present disclosure;
Fig. 2b shows a schematic representation of the basic design of a steam side of a frame element according to embodiments of the present disclosure;
Fig. 3 shows a schematic representation of a system with a membrane and 4 frame elements according to embodiments of the present disclosure, wherein the distillation system is schematically shown;
Fig. 4a shows a schematic representation of the steam side a first frame type 101 which comprises a condensation sealing according to embodiments of the present disclosure;
Fig. 4b shows a schematic representation of the feed side of a first or second frame type 101, 102 which comprises a feeding sealing according to embodiments of the present disclosure;
Fig. 4c shows a schematic representation of the steam side a second frame type 102 which comprises an evaporation sealing according to embodiments of the present disclosure;
Fig. 5 shows a schematic representation of a distillation system of e.g. fig. 3 having a plurality of parallel evaporation and condensation units according to embodiments of the present disclosure.

### DESCRIPTION OF THE EMBODIMENTS

Reference will now be made in detail to exemplary embodiments of the disclosure, examples of which are illustrated in the accompanying drawings. Wherever possible, the same reference numbers will be used throughout the drawings to refer to the same or like parts.

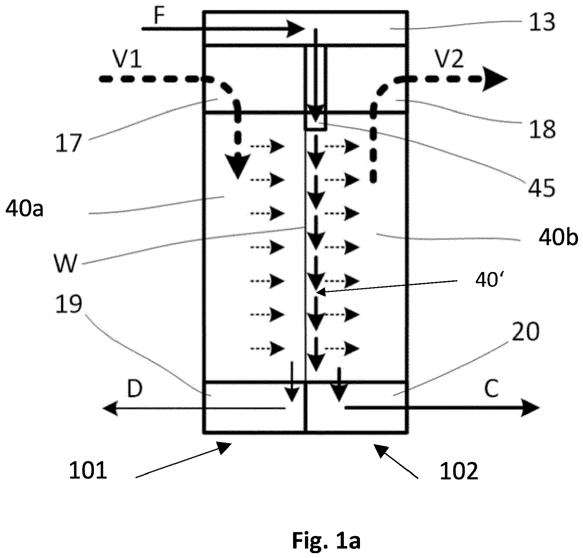

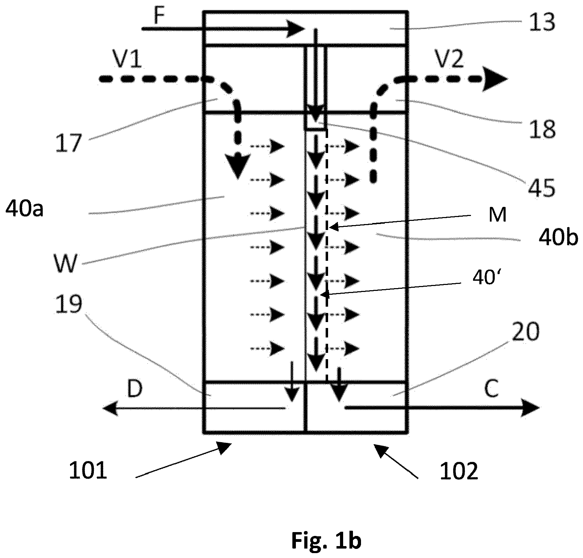

Fig. 1a shows the schematic distillation process of fig. 1b, wherein the system does not have a membrane.

Fig. 1b shows a schematic representation of a distillation process in a system having a membrane according to embodiments of the present disclosure.

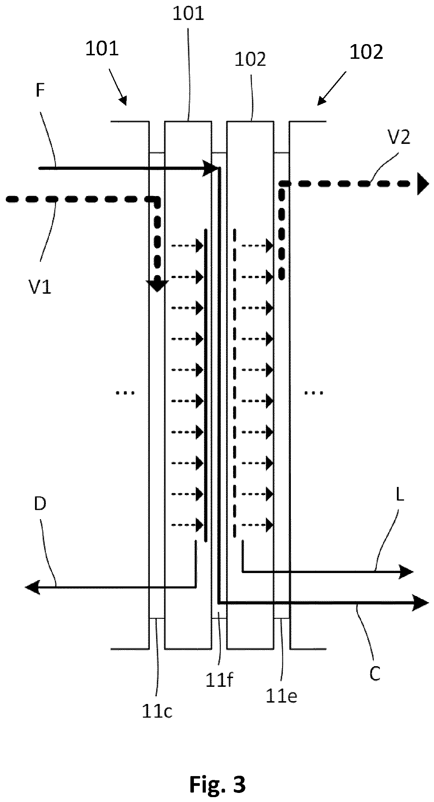

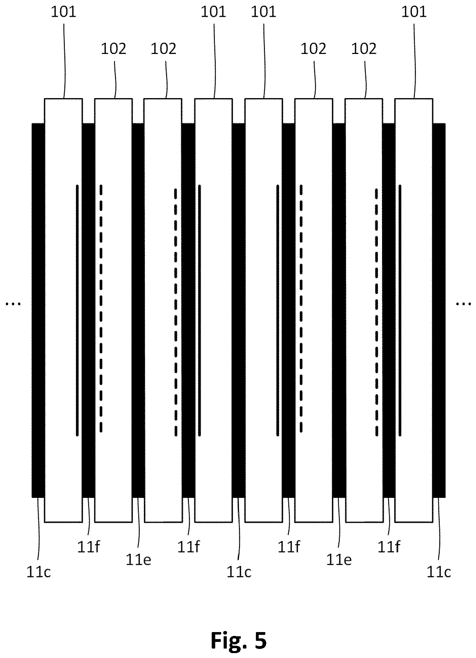

The distillation process may be performed by a distillation system, as schematically shown in fig. 1a, and shown in the examples of fig. 3 and fig. 5. The distillation system may be configured for concentrating a feed liquid F, e.g. dirt water or any solvent containing a salt.

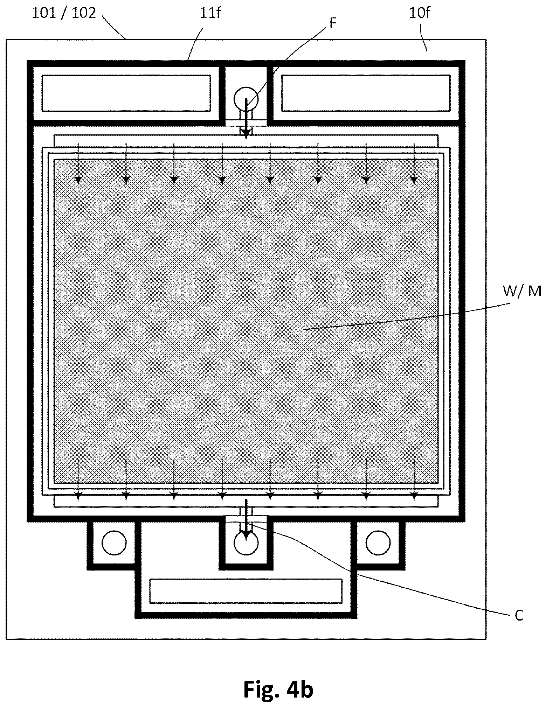

The system comprises at least one condensation unit and at least one adjacent evaporation unit. Each unit is provided by respective frame element 101, 102 assembled together to form a stack of frame elements (cf. e.g. fig. 3 and 5). The condensation unit may comprise a first steam space 40a and a condensation wall W at least partly bordering the first steam space 40a. The evaporation unit 102 may comprise a second steam space 40b. A feeding area 40' may be provided substantially between the condensation unit and the evaporation unit (and by a feeding sealing, as described in the context of fig. 3 and fig. 4b). The feeding area 40' is bordered by the condensation wall.

The system is configured such that the condensation wall can be heated by a first steam V1 in the first steam space 40a. The system is further configured such that feed liquid F flows on the condensation wall W in the feeding area, such that a second steam V2 arising from the feed liquid F moves into the second steam space 40b. The feeding area 40' may be open towards the second steam space 40b in the sense that there is desirably no membrane between the feeding area 40' and the second steam space 40b. However, there may be arranged a membrane M, as shown in fig. 1b.

The condensation wall W may be flexible, wherein the condensation wall W optionally may comprise or may be a foil.

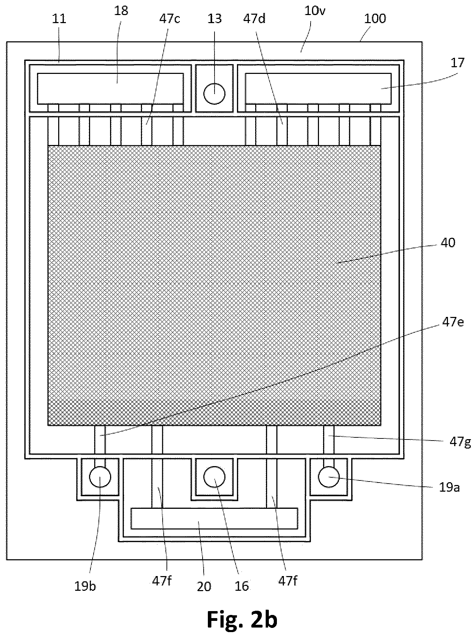

The first steam space 40a may be connected to at least one vapor channel 17 by at least one first steam connection notch (as described in more detail in context of the subsequent figures) such that the first steam V1 can enter the first steam space. The first steam space 40a may be further connected a condensate collection passage 19a, 19b arranged below the first steam space 40a, e.g. by at least one distillate connection notch (as described in more detail in context of the subsequent figures). A condensate D resulting from the condensed first steam V1 may thus leave the first steam space 40a via said collection passage 19a, 19b (also cf. fig.2b).

The frame elements 101, 102 are configured (e.g. by a sealing element arranged between them, as explained in the context of fig. 3 and 4b) such that a gap remains between the frame elements when they are stacked in the modular flow system. This gap in particular forms a feeding area 40' being aligned with the inner regions of the stacked frame elements and being in front of the first and second steam spaces 40a, 40b of the adjacent frame elements.

The feeding area 40' is bordered on a first side by the condensation wall W (i.e. a liquid tight wall) toward the first steam space 40a. On a second, opposite side the feeding area 40' may be open towards the second steam space 40b (cf. fig. 1a) or may be bordered by a membrane M (cf. fig, 1b).

A feed (or feed liquid) F is supplied via the first passage opening 13 to the feeding area 40'. Said feed may be a liquid, e.g. salt water or dirt water which is distilled and/or cleaned by the modular flow system. The feed may have a temperature slightly lower than the vapor V1, e.g. a difference of 4 to 6°C.

Due to the heat transferred from the condensing vapor V1, the feed F is heated and evaporates, such that the second steam V2 is generated. In this regard it is possible that the pressure within the feeding area or in parts of the modular flow system is reduced such that the feed boils when heated.

Due to the distillation, the second steam V2 enters from the feeding area 40' the second steam space 40b of the frame element 102. Said steam V2 may have an equal or only a slightly lower temperature than the (boiling) feed F.

The arrangement shown in Fig. 1a, 1b or 3 may be a first stage of a modular flow system (not shown). The vapor V2 leaving the second frame element 102 may be transmitted to a second stage of the modular flow system where it may be used as (heating) vapor in a first frame element 101 again. Thus, the modular flow system may have several stages (e.g. 10 or more) wherein in each subsequent stage the temperatures of the supplied vapor and feed are slightly decreased with regard to the preceding stage.

A drain or leakage passage 20 may be arranged below the second steam space 40b and/or the feeding area 40', the drain passage 20 being configured such that the feed liquid f can leave the feeding area 40'via the drain passage 20.

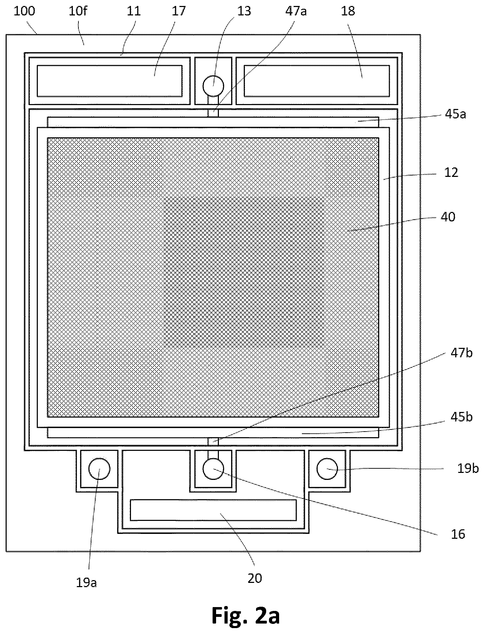

The second steam space 40b may be connected to a vapor channel 18 by at least one a second steam connection notch (as described in more detail in context of the subsequent figures 2a to 4c). The second steam space 40b may further be connected to the drain passage 20 by at least one drain or leakage connection notch 47f (as described in more detail in context of the subsequent figures 2a to 4c). The second steam V2 may thus leave the second steam space 40b via the vapor channel 18 and/or the drain passage 20.

Due to the arrangement of the vapor channels above the inner region 40, the whole inner region 40 may serve as a barrier for droplets being carried with the flow of the created vapor V2. In other words, the feed would need to fill the complete inner region, in order to pass the barrier given by the configuration of the frame element, i.e. to flow into the vapor channel 18. Accordingly, there must be a proper separation of the steam V2 from feed. The vapor channels arranged in an upper area of the frame element are advantageous because of the gravity separation. Hence, any contamination of the final product (i.e. the distillate) can be effectively prevented.

The condensation wall W may be moveable within the feeding area. In particular, the system may be configured such that the condensation wall may be deformed by the first steam into or towards the second steam space 40b. Moreover, the system may be configured such that the condensation wall moves back to its initial position when the first steam may be stopped to enter the first steam space or in case of a pressure balance between the first and the second steam space.

A feed spacer (not shown in fig. 1a or 1b) may be arranged within the feeding area 40', as explained in more detail below.

Fig. 2a shows a schematic representation of the basic design of a feed side of a frame element 100 according to embodiments of the present disclosure;

Fig. 2b shows a schematic representation of the basic design of a steam side of a frame element 100 according to embodiments of the present disclosure.

Accordingly, each frame element 100 of the system comprises a feed side 10f (cf. fig. 2a) and an opposite steam side 10v (cf. fig. 2b). An outer area of the frame element comprises a plurality of channels and an inner area 40. For example, each frame element may comprise an outer frame and an inner frame, the inner frame encasing the inner region 40 and being surrounded by the outer frame. The channels and connection notches may be arranged between the outer frame and the inner frame.

The plurality of channels may include at least one of a feed channel 13 above an inner area 40, a concentrate channel 16 below the inner area 40, two steam channels 17, 18 above an inner area 40, one or several distillate channel 19a, 19b below an inner area 40, and optionally a drain passage 20 below an inner area 40. Having a concentrate channel 16 and in addition a drain passage 20 may be in particular useful, in case the system comprises membranes, as it will be also explained in context of fig. 3. The channels may be openings from the feed side to the steam side of the frame element.

Having two steam channels 17, 18 and distillate channel 19a, 19b which are symmetrically arranged in the frame element (cf. fig. 2a and 2b) may be advantageous, as adjacent frame elements can be turned around their vertical symmetry axis and stacked together, thereby fitting the symmetric channels to each other. In this way the stack of frame elements can form several parallel condensation and evaporation units and several serial stages, as explained e.g. in context of fig. 5. In other words, each frame element may be axis symmetrical with the axis of symmetry vertical when the frame elements are stacked together in the system.

An inner area of the frame element 100 is basically open, encased by the outer area and limited by the feed side and the opposite steam side. The inner area may comprise a grid element. Depending on the function of the inner area it can be bordered (or limited) with a liquid tight wall on the feed side and optionally with a membrane on the steam side.

Each frame element may further comprise a sealing area 12 surrounding the inner area and arranged on the feed side. The sealing area and the comprised inner area may be slightly thinner (in a side view like in fig. 5) than the outer area of the frame element. In this way, there is some remaining space between two adjacent frame elements 101, 102 in this sealing area for a feed spacer, which may be placed in a feed area (also cf. the flow of feed F between frame elements 101 and 102 in fig. 3).

In other words, the sealing area 12 may also be referred to as a lowered area 12.

The lowered area 12 may in particular serve to accommodate the feed spacer (not shown) and optionally at least one of the membrane M and the condensation wall W (depending on the frame type and the use of a one of these elements).

The feed spacer may be arranged in a feed space, which may be arranged between the condensation wall and a membrane. The feed spacer may be used to keep the feed space between the condensation wall and the adjacent membrane open, in order to allow a feed liquid to pass the feed space. In case a membrane is not used, the feed spacer is not required.

The feed spacer may have a mesh-like form and be relatively thin, e.g. me have a thickness of 0.5mm or less.

The frame element comprises on the feed side a first group of connection notches connecting some of the channels with the inner area. The first group comprises a first feed connection notch 47a connecting the feed channel 13 with the inner area and optionally a concentrate connection notch 47b connection the inner area with the concentrate channel 16. The concentrate connection notch 47b and the concentrate channel 16 are only necessary, in case the steam side is bordered (limited or covered) by a membrane. If not, the concentrate C may also leave the inner area via a drain connection notch 27f (arranged on the steam side of an adjacent frame element) and the drain passage 20 together with a potential leakage L, as it will be understood from fig. 3.

The feed connection notch 47 may be connected to a feed distribution notch 45a, which may extend in a horizontal direction across the upper side of the inner area 40.

Moreover, the concentrate connection notch may be connected to a concentrate collection notch 45b, which may extend in a horizontal direction across the lower side of the inner area 40.

Each frame element further comprises a second group of connection notches arranged on the steam side and connecting others of the channels with the inner area. The second group comprises a first steam connection notch (or a plurality of steam connection notches to increase the steam flow) 47c connecting a first steam channel 18 with the inner area, a second steam connection notch (or a plurality of steam connection notches to increase the steam flow) 47d connecting a second steam channel 17 with the inner area, and a distillate connection notch 47e connecting a distillate channel 19a, 19b with the inner area.

A connection notch may be a groove in the (material of the) frame element.

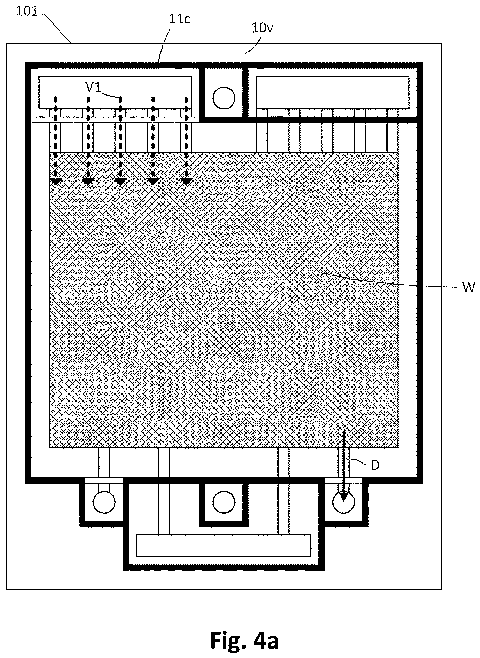

Each frame element may further comprise a sealing groove 11 arranged on both the feed side and the steam side and configured to receive the sealing element which connects adjacent frame elements. The system further comprises sealing elements 11c, 11f, 11e (cf. fig. 4a to 4c) configured to connect adjacent frame elements. However, also the outer areas of adjacent frame elements of the system may be in contact to each other.

The sealing elements comprise different sealing types, as shown in fig. 4a to 4c, which are formed such that they block different connection notches. In particular, the different sealing types may be configured to leave different connection notches unblocked. For example, the different sealing types may be made of the same base type, wherein different sections may be cut off.

The system may be configured such that at least one sealing element may be removeable from the frame elements. This may facilitate maintenance or cleaning of the system, as well as replacing single elements, e.g. a single sealing element or a single frame element.

Fig. 3 shows a schematic representation of a system with a membrane and four frame elements according to embodiments of the present disclosure, wherein the distillation system is schematically shown.

Fig. 4a shows a schematic representation of the steam side of a first frame type 101 with a condensation wall W and a placed condensation sealing 11c according to embodiments of the present disclosure.

Fig. 4b shows a schematic representation of the feed side of a first frame type 101 with a condensation wall W or of a second frame type 102 with membrane wall M and a placed feeding sealing 11f according to embodiments of the present disclosure.

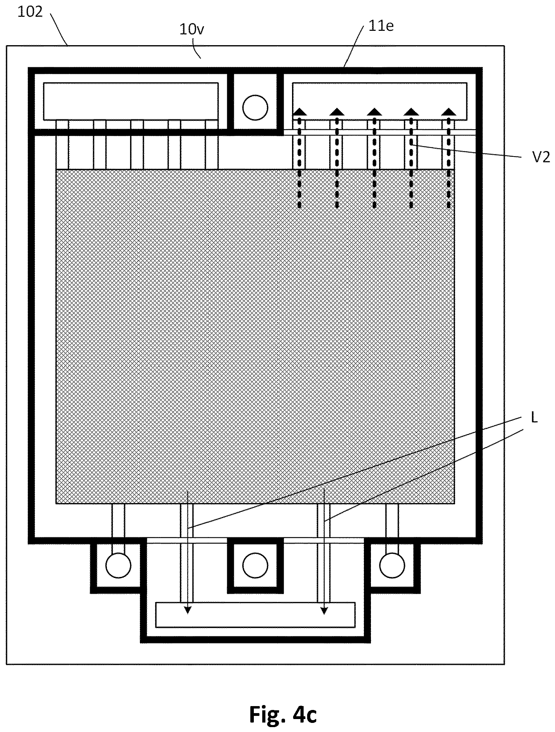

Fig. 4c shows a schematic representation of the steam side of a second frame type 102 with a placed evaporation sealing 11e according to embodiments of the present disclosure.

The distillation (i.e. condensation and evaporation) process performed by the system shown in the example of fig. 3 may principally correspond to that one in fig. 1a or 1b.

The frame types 101 and 102 may basically correspond to the frame element shown in fig. 2a and 2b. In other words, the frame elements 101, 102 of the system may basically be made of the same base type shown in fig. 2a and 2b. The different frame types 101 and 102 may merely differ from the basic frame element of fig. 2a, 2b and from each other by comprising (or not comprising) a sealed liquid tight wall W and/or an optional membrane M, as described in the following. Moreover, also different sealing types 11c, 11f, 11e may be used to connect adjacent frame elements. The sealing element may be removeable from the frame elements.

The different frame types 101, 102 and their respective sealing types 11c, 11f, 11e of fig. 4a to 4c are also shown in fig. 3 in the form of a stack. This stack may constitute a distillation system.

A first frame type 101 may be a condensation frame comprising a liquid tight wall W in the form of a foil attached to the sealing area to cover the inner area and/or the space of the inner area on the feed side.

A second frame type 102 may be an evaporation frame which may comprise a membrane M attached to the sealing area to cover the inner area and/or the space of the inner area on the feed side.

Alternatively, the second frame type may be an evaporation frame, wherein the inner area and/or the space of the inner area may be open on the feed side, i.e. open towards an adjacent frame element or in other words, without being covered by a membrane or a foil.

Accordingly, the evaporation frame element 102 may be equipped with or without a membrane.

The sealing types may comprise at least a first type being a condensation sealing 11c, a second type being a feeding sealing 11f and a third type being an evaporation sealing 11e.

The condensation sealing 11c may be arranged between two adjacent frame elements 101, which both face the condensation sealing 11c with their steam side 10v (also cf. fig. 4a). These two frame elements 101 may together be referred to as a condensation unit of the system.

Similarly, the evaporation sealing 11e may be arranged between two adjacent frame elements 102, which both face the evaporation sealing 11e with their steam side 10v (also cf. fig. 4c). These two frame elements 102 may together be referred to as an evaporation unit of the system.

Moreover, as shown in fig, 3, a condensation frame 101 may be adjacent to an evaporation unit 102 in the stack and may be connected by a feeding sealing 11f with their feed side 10f.

As shown in fig. 4a, the condensation sealing 11c may be configured to block all connection notches except the first steam connection notch(es) 47c connecting a first steam channel 18 with the inner area, and the distillate connection notch(es) 47g, 47e connecting one or several distillate channels 19a, 19b with the inner area 40 (also cf. fig. 2b). Accordingly, the condensation sealing 11c allow a vapor V1 to enter the inner area and a distillate D to leave the inner area (also cf. fig. 3).

Furthermore, as shown in fig. 4b, the feeding sealing 11f may be configured to block all connection notches except a feed connection notch 47a connecting a feed channel 13 with the inner area 40, and optionally a concentrate connection notch 47b connecting a concentrate channel 16 with the inner area, e.g. in case the evaporation frame comprises a membrane arranged on the feed side, or in case the connection notch to the concentrate channel is arranged on the steam side of the frame. Accordingly, the feeding sealing 11f allows a feed liquid F to enter the inner area and a concentrate C to leave the inner area (also cf. fig. 3).

Moreover, as shown in fig. 4c, the evaporation sealing 11e may be configured to block all connection notches except steam connection notch(es) 47d connecting a further steam channel 17 with the inner area 40, and optionally additional leakage connection notch(es) 47f connecting a leakage channel 20 with the inner area 40. Accordingly, the evaporation sealing 11e allows a vapor V2 to leave the inner area and a potential leakage L to leave the inner area (also cf. fig. 3).

The leakage channel may be present, in case the evaporation unit comprises a membrane. Otherwise the leakage channel may be combined with (or represented by) the existing concentrate channel of an adjacent frame element.

Accordingly, the first group of connection notches arranged on the feed side 10f may further comprise a concentrate connection notch connecting a concentrate channel with the inner area. However, this concentrate connection notch may also be part of the second group, i.e. be arranged on the steam side, e.g. in case the evaporation unit does not comprise a membrane element. In this case a feed liquid passing the inner area may namely be evacuated by a concentrate connection notch arranged on the steam side of an adjacent frame element.

As also described in more detail in context of fig. 1a and 1b, a vapor (or steam) V1 may enter the inner area of the first frame element 101 via a first vapor channel and condensate at the liquid tight frame wall W. A feed liquid F entering a gap between the first and the second frame type 101, 102 may evaporate due to the heat transferred by the condensing vapor. The resulting evaporated vapor V2 may enter the second frame element 102 and leave it via a further vapor channel.

Fig. 5 shows a schematic representation of a distillation system (e.g. based on the system of fig. 3) having a plurality of parallel evaporation and condensation units according to embodiments of the present disclosure.

Accordingly, the evaporation units 102+102 and condensation units 101+101 may be stacked to form the distillation system. From a functional perspective, the evaporation and condensation units may be connected in parallel to each other, such that the overall distillation capacity of the system can be increased. These parallel evaporation and condensation units may form a stage of the system.

In addition, the system may be a multistage distillation apparatus comprising a plurality of serial stages, each stage comprising at least one condensation unit and at least one evaporation unit, wherein a first stage is configured to generate steam and feed the steam to a second stage.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. A distillation system for concentrating a feed liquid, comprising:
at least one condensation unit and at least one adjacent evaporation unit, each unit being provided by at least one frame element (101, 102), wherein
the frame elements of the system are assembled together to form a stack of frame elements, wherein
each frame element comprises:
• a feed side and an opposite steam side,
• an outer area comprising a plurality of channels including at least one of:
a feed channel, a concentrate channel, two steam channels, and a distillate channel,
• an inner area which is open, encased by the outer area and limited by the feed side and the opposite steam side,
• a first group of connection notches comprising at least one connection notch arranged on the feed side and connecting some of the channels with the inner area, the first group comprising:
∘ a feed connection notch connecting a feed channel with the inner area,
• a second group of connection notches arranged on the steam side and connecting others of the channels with the inner area, the second group comprising:
∘ a first steam connection notch connecting a first steam channel with the inner area,
∘ a second steam connection notch connecting a second steam channel with the inner area, and
∘ a distillate connection notch connecting a distillate channel with the inner area,
the system further comprises sealing elements configured to connect adjacent frame elements, wherein the sealing elements comprise different sealing types which are formed such that they block different connection notches, wherein
the inner area of the frame element of the condensation unit is covered with a liquid tight wall on the feed side.

2. The system according to claim 1, wherein
each frame element further comprises at least one of:
a sealing area surrounding the inner area and arranged on the feed side, and
a sealing groove arranged on both the feed side and the steam side and
configured to receive a sealing element which connects adjacent frame elements.

3. The system according to claim 1 or 2, wherein
each frame element is axis symmetrical with the axis of symmetry vertical when the frame elements are stacked together in the system.

4. The system according to the preceding claim, wherein
the inner region provides an open 3D space surrounded by the frame element, wherein optionally a grid element is arranged in the open space of the inner area.

5. The system according to any one of the preceding claims, wherein the different sealing types are configured to leave different connection notches unblocked, and/or
the different sealing types are made of the same base type, wherein different sections are cut off, and/or
the system is configured such that at least one sealing element is removeable from the frame elements.

6. The system according to any one of the preceding claims, wherein the sealing types comprise at least a first type being a condensation sealing, a second type being a feeding sealing and a third type being an evaporation sealing, wherein at least one of:
the condensation sealing is configured to block all connection notches except:
• the first steam connection notch connecting a first steam channel with the inner area, and
• the distillate connection notch connecting a distillate channel with the inner area,
the feeding sealing is configured to block all connection notches except:
• a feed connection notch connecting a feed channel with the inner area, and
• optionally a concentrate connection notch of the first group connecting a concentrate channel with the inner area, and
the evaporation sealing is configured to block all connection notches except:
• the second steam connection notch connecting a second steam channel with the inner area, and
• optionally an additional leakage connection notch connecting a leakage channel arranged on the steam side with the inner area.

7. The system according to any one of the preceding claims, wherein the frame elements of the system are made of the same base type, wherein:
• a first frame type is a condensation frame (101) comprising a liquid tight wall in the form of a foil attached to the sealing area to cover the inner area and/or the space of the inner area on the feed side, and
• a second frame type is an evaporation frame (102)
∘ which comprises a membrane attached to the sealing area to cover the inner area and/or the space of the inner area on the feed side, or
∘ wherein the inner area and/or the space of the inner area is open on the feed side.

8. The system according to any one of the preceding claims, wherein the condensation unit comprises two stacked condensation frames (101) arranged such that their steam sides face each other, and/or
the evaporation unit comprises two stacked evaporation frames (101) arranged such that their steam sides face each other, and/or
the system comprises a plurality of stacked condensation-evaporation sets, each set comprising a condensation unit and an evaporation unit, wherein the sets are alternately connected via the steam sides so that the same unit types are always adjacent to each other.

9. The system according to any one of the preceding claims, wherein the condensation frames (101) of the condensation unit are connected by a condensation sealing, and/or
the evaporation frames (102) of the evaporation unit are connected by an evaporation sealing.

10. The system according to any one of the preceding claims, wherein the frames of the condensation unit and of the evaporation unit are adjacent to each other and connected by a feeding sealing.

11. The system according to any one of the preceding claims, wherein the channels are provided by openings in the frame element from the feed side to the opposite steam side, and/or
the connection notches are arranged on a surface of one of the feed side and the steam side.

12. The system according to any one of the preceding claims, wherein the two steam channels are arranged above the inner region, and/or
the distillate channel and the optional leakage channel are arranged below the inner region.

13. The system according to any one of the preceding claims, wherein each frame element comprises:
an outer frame and an inner frame, the inner frame encasing the inner region and being surrounded by the outer frame,
wherein the channels and the notches are arranged between the outer frame and the inner frame.

14. The system according to any one of claims 2 to 13, wherein
each frame element comprises a lowered area (12) having a reduce thickness compared to the outer area and/or outer frame, the lowered area including at least one of the inner area, the inner frame, and a section of the frame element where the sealing area is arranged, and/or
each frame element comprises a distribution notch on the feed side connected to the feed connection notch and configured to distribute a feed liquid across the inner area, the distribution notch being arranged outside the lowered area and/or between the sealing grove and the lowered area.

15. The system according to any one of the preceding claims, wherein the system is a multistage distillation apparatus, comprising:
a plurality of serial stages, each stage comprising at least one condensation unit and at least one evaporation unit, wherein:
a first stage is configured to generate steam and feed the steam to a second stage.
